# EUROPEAN PATENT SPECIFICATION

(11) **EP 3 907 136 B1**
(45) Date of publication and mention of the grant of the patent: **05.07.2023**
(21) Application number: 21171762.4
(22) Date of filing: 03.05.2021
(51) Int. Cl.: B64D 27/00, B64D 29/00, B64D 29/04, B64D 27/02

(54) **HYBRID JET ELECTRIC AIRCRAFT**
HYBRIDES ELEKTRISCHES DÜSENFLUGZEUG
AÉRONEF HYBRIDE À RÉACTION ÉLECTRIQUE

(30) Priority: 07.05.2020 US 202015929531
(43) Date of publication of application: 10.11.2021
(73) Proprietor: Gulfstream Aerospace Corporation, Savannah, Georgia 31402 (US)
(72) Inventor: LANDERS, Thomas, Savannah, 31402 (US); LAVRISA, Tom, Savannah, 31402 (US)
(74) Representative: LKGlobal UK Ltd.

(56) References cited:
- EP-A1- 3 318 495
- EP-A1- 3 620 386
- FR-A1- 3 043 724
- US-A1- 2012 209 456

## Description

### TECHNICAL FIELD

The technical field relates generally to propulsion systems for aircraft, and more particularly relates to aircraft propulsion, aircraft avionics systems, propulsion and avionics algorithms, and aircraft equipped with electrically powered propulsion systems to provide supplemental thrust during aircraft operations.

### BACKGROUND

Typically, during aircraft operation, multiple engines, such as turbofan engines are used to provide forward thrust to the aircraft in order to takeoff, climb, cruise, descend and land. Each engine may provide a maximum amount of thrust, such as 17000 pounds of thrust, and the total combined thrust of the engines is used to propel the aircraft. Typically, a maximum amount of thrust is required at takeoff and climb. A reduced amount of thrust is typically required to maintain an aircraft cruising speed at altitude. During this cruising phase, the engines are typically set to a reduced thrust, such as 80%. During cruising, the engines are not providing maximum output and the aircraft is transporting unused engine capability and weight. As such, it is desirable to provide propulsion systems, flight control algorithms, and aircraft that provide convenient and improved flight propulsion systems throughout all phases of flight. In addition, other desirable features and characteristics will become apparent from the subsequent summary and detailed description, and the appended claims, taken in conjunction with the accompanying drawings and this background.

The above information disclosed in this background section is only for enhancement of understanding of the background of the invention and therefore it may contain information that does not form the prior art that is already known in this country to a person of ordinary skill in the art.

### SUMMARY

Disclosed herein are flight propulsion systems, flight propulsion avionics, control algorithms, aircraft and related control logic for provisioning aircraft, methods for making and methods for operating such systems, and other vehicles equipped with onboard control systems. By way of example, and not limitation, there is presented a dual aircraft propulsion system employing turbine and electric engine propulsion.

In a first embodiment, an aircraft is provided in accordance with appended claim 1.

In accordance with another aspect of the present disclosure, a method is provided in accordance with appended claim 7.

The above advantage and other advantages and features of the present disclosure will be apparent from the following detailed description of the preferred embodiments when taken in connection with the accompanying drawings.

### BRIEF DESCRIPTION OF DRAWINGS

The above-mentioned and other features and advantages of this invention, and the manner of attaining them, will become more apparent and the system and method will be better understood by reference to the following description of embodiments of the invention taken in conjunction with the accompanying drawings.
FIG. 1a is illustrative of a top view of an exemplary hybrid jet electric aircraft in accordance with the teachings of the present disclosure.
FIG. 1b is illustrative of a side view of an exemplary hybrid jet electric aircraft in accordance with the teachings of the present disclosure.
FIG. 2 is a simplified block diagram illustrating a non-limiting embodiment of a system implementing a hybrid jet electric aircraft propulsion system in accordance with the present disclosure.
FIG. 3 shows a flow diagram illustrating a non-limiting embodiment of a method for performing a hybrid jet electric aircraft propulsion system in accordance with the teachings of the present disclosure.
FIG. 4 shows a flow diagram illustrating a non-limiting embodiment of a method for performing a hybrid jet electric aircraft propulsion system in accordance with the teachings of the present disclosure.
FIG. 5 is a simplified block diagram illustrating another non-limiting embodiment of a system for a hybrid jet electric aircraft propulsion system in accordance with the present disclosure.
FIG. 6 shows a flow diagram illustrating another non-limiting embodiment of a method for implementing a hybrid jet electric aircraft propulsion system in accordance with the teachings of the present disclosure.

The exemplifications set out herein illustrate preferred embodiments of the disclosure, and such exemplifications are not to be construed as limiting the scope of the disclosure in any manner.

### DETAILED DESCRIPTION

The following detailed description is merely exemplary in nature and is not intended to limit the invention or the application and uses of the invention. Furthermore, there is no intention to be bound by any theory presented in the preceding background or the following detailed description.

Various non-limiting embodiments of avionic display systems, avionic algorithms, and aircraft are provided. In general, the disclosure herein describes a system and method for providing augmented thrust to an aircraft employing a turbofan engine using one or more electric propulsion engines.

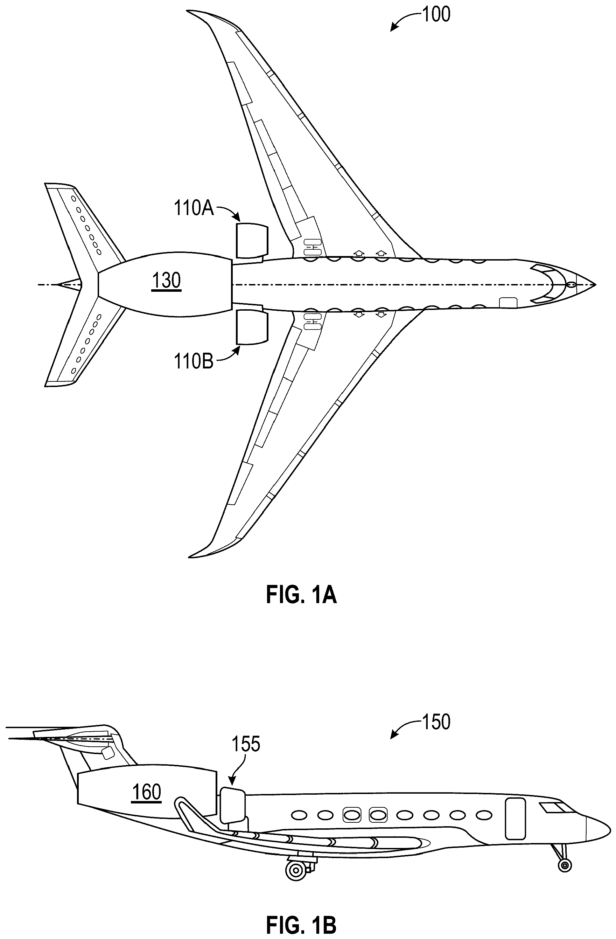

Turning now to FIG. 1a, a top view of an exemplary hybrid jet electric aircraft 100 in accordance with an embodiment of the present disclosure is shown. The exemplary hybrid jet electric aircraft which includes a single jet/turbofan engine 130 and an electrically powered propulsion system having a first electric engine 110a and a second electric engine 110b. The electric engines 110a, 110b may be used to supplement thrust during take-off, and can be shut down while in-flight. The accompanying electric system power management system may permit innovative opportunities to conserve fuel, such as using regenerative power extraction during descent to charge the batteries and use of the electric propulsion when near the destination to save fuel. The electrical propulsion and energy storage would only need to be sufficient for a take-off and immediate return to landing at the time of take-off, and could then be charged as the aircraft climbs and begins the flight such that enough energy was available to return to the departure airport initially, and make a successful diversion once established in cruise. Near the end of the flight, as the aircraft neared the destination the electrical energy could be used to complete the flight at reduced jet fuel consumption. Complementary technologies such as regenerative braking on the main wheels and electric taxi and take-off assistance via the main wheels can aid in power management and performance enhancement. If the turbofan engine 130 should fail, the electrical propulsion system controlling the first electric engine 110a and the second electric engine 110b could be quickly activated providing sufficient thrust to make a safe landing.

Turning now to FIG. 1b, a side view of an exemplary hybrid jet electric aircraft 150 in accordance with an embodiment of the present disclosure is shown. The exemplary aircraft 150 shows a center mounted turbojet engine 160 and a right side electric engine 155.

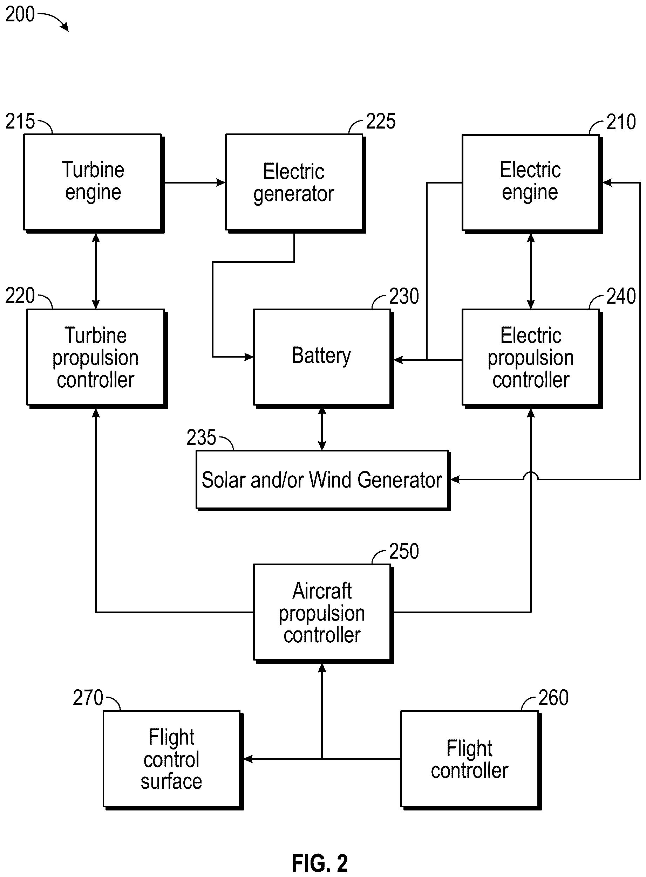

Turning now to Fig. 2, a block diagram illustrative of an exemplary aircraft system 200 for implementing the hybrid jet electric aircraft is shown. The exemplary aircraft system 200 includes a turbine engine 215, an electric engine 210, an electric generator 225, abattery 230, an electric propulsion controller 240, a turbine propulsion controller 220, an aircraft propulsion controller 250, a flight controller 260 and a flight control surface 270.

The exemplary aircraft system 200 may include a turbine engine 215 used as a primary propulsion source for the aircraft. The turbine engine 215 may be a rotary, gas powered, engine that typically comprises an air intake followed by an air compressor. The compressed air is then fed to one or more combustion chambers which are then used to power a turbine. The powered turbine is then operative to provide thrust to the aircraft. Alternatively, the turbine engine 215 may be replaced with a ram compression or noncontinuous combustion engine, such as a pulsejet, motor jet or pulse detonation engine, or a piston engine turning a conventional propeller. While the exemplary system described with a single turbine engine 215, the aircraft may be equipped with multiple turbine engines as a design may require and still employ the aspects of the claimed embodiments.

In an exemplary embodiment, the turbine engine 215 may include an electric generator 225, such as a constant speed drive (CSD) electrical generator. The electric generator 225 may be used to power electronic systems on the aircraft and recharge an electric battery 230. For example, a CSD generator may extract energy from an input shaft of the turbine engine 215 to drive a geared rotational translation mechanism such that the output shaft spins at a constant rate. The electrical generator 225 may then use the rotational energy from the output shaft of the turbine engine 215 to generate electricity.

The electric engine 210 is an aircraft propulsion engine used to provide forward thrust to the aircraft using electricity from the battery 230, solar panels and/or wind generator 235, the electric generator 225, or other source of electricity. The electric engine 210 may receive control instructions, such as thrust level, regeneration mode activation, etc., in response to a control signal from the electric propulsion controller 240. While the exemplary system described with a single electric engine 210, the aircraft may be equipped with multiple electric engines as a design may require and still employ the aspects of the claimed embodiments. In an embodiment, the electric engine 210 is retractable into the aircraft fuselage during aircraft operation at altitude to reduce aerodynamic drag and increase fuel efficiency. It may include other features to reduce aerodynamic drag when it is not being used, such as feathering blades or a method to block off the inlet in an aerodynamic manner.

The battery 230 may be a lithium-ion, nickel-metal hydride, lead-acid, or ultracapacitor battery, or any combination thereof. The battery 230 may be used to power the electric engine 210 in response to a control signal from the electric propulsion controller 240. The battery 230 may be further used to power other aircraft systems. The battery 230 may be charged by the electric generator 225 in the turbine engine 215 or in response to regenerative operation of the electric engine 210 such as during landing.

The electric propulsion controller 240 is used to generate control signals for controlling the electric engine 210 and the battery 230. The electric propulsion controller 240 is operative to receive control signals from an aircraft propulsion controller 250 which is used for overall aircraft propulsion control. The control signals generated by the aircraft propulsion controller 250 may include thrust level, engagement of regenerative charging, and the like. The aircraft propulsion controller 250 may be further used to generate control signals to couple to the turbine propulsion controller 220 which is used to control the turbine engine 215.

The exemplary system 200 may further include a flight controller 260 for generating control signals to couple to the turbine propulsion controller 220 and the electric propulsion controller 240 in order to control aircraft propulsion integrating both electric and combustion propulsion. The flight controller 260 may be operative to receive control signals from pilot controls and may be operative to receive other flight data from aircraft sensors. The flight controller 260 may further generate control signals to control the operation of one or more flight control surfaces 270 during aircraft operation.

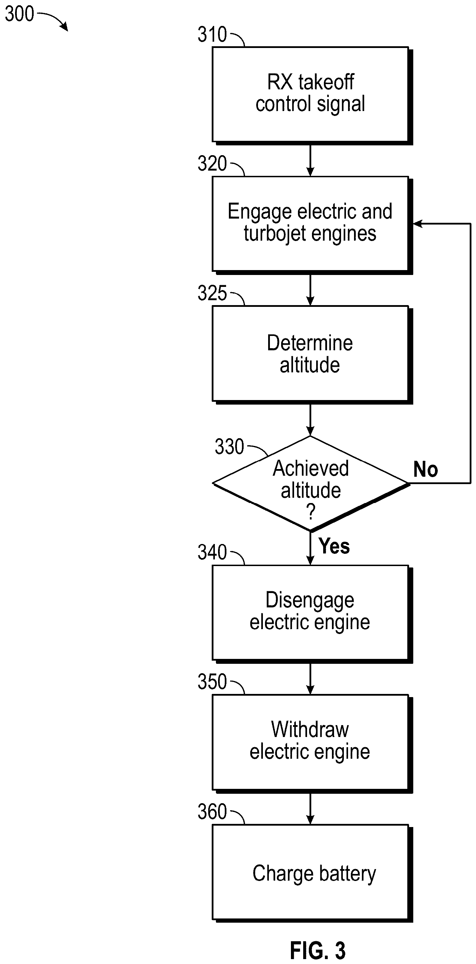

Turning now to Fig. 3, a flow diagram illustrating a non-limiting embodiment of a method 300 of providing the hybrid jet electric aircraft operation in accordance with the teachings of the present disclosure is shown. The method is first operative to receive 310 a control signal indicative of a takeoff maneuver. The control signal indicate of a takeoff maneuver may be generated by an aircraft flight controller in response to a pilot input such as an adjustment of a throttle or thrust controller.

In response to the reception of the control signal indicative of a takeoff maneuver, the method is next operative to engage a turbine engine and an electric engine at a thrust level indicated by the control signal. In addition, the turbine engine and the electric engine may be engaged at different thrust levels in response to the control signal. For example, during takeoff, the turbine engine may be engaged at or near 100 percent, and the engagement of the electric engine may be gradually increased from 0 percent thrust to 100 percent thrust at takeoff speed such that excessive acceleration is not experienced by aircraft occupants. While the aircraft is climbing, or in ascent, the electric engine may be engaged at 100 percent thrust to provide additional thrust to the thrust provided by the turbine engine.

During ascent, the method is operative to determine 325 the altitude of the aircraft. The altitude of the aircraft may be determined in response to an output of an altimeter or other altitude measuring sensor. The method is next operative to determine 330 if a cruising altitude has been reached in response to the determined altitude. Alternatively, the method may be operative to determine if the cruising altitude has been reached in response to a pilot input, such as a positioning of a control stick and/or reduction of thrust or aircraft throttle control.

In response to a determination that a cruising altitude has been reached, or an altitude requiring reduced thrust, the method is next operative to disengage 340 the electric engine. In response to disengaging the electric engine, the aircraft may then be propelled only by the turbine engine or other combustion engine. In one embodiment, the method is operative to retract 350 the electric engine into the aircraft fuselage. The electric engine is retracted to reduce aerodynamic drag while the aircraft is operating with thrust provided only by the turbine engine. The method may next be operative to charge 360 a battery used to power the electric engine. The battery may be charged by a generator powered by the turbine. Alternatively, the battery may be charged by a solar panel, wind driven generator or the like. In this exemplary embodiment, the thrust from the turbine engine was augmented by thrust provided by an electric engine in order to provide enough thrust for the aircraft to takeoff and climb to a cruising altitude. Once at the cruising altitude, the turbine engine may provide sufficient thrust for aircraft operation at altitude. In case of a need for additional thrust beyond the capabilities of the turbine engine, such as a climb to a higher altitude or malfunction of the turbine engine, the electric engines may be reengaged. It may be desirable to engage the electric engines toward the end of the cruise flight to use any energy stored in the batteries therefore reducing the amount of fuel used by the turbine engine. The energy taken from the battery will be replaced during the descent.

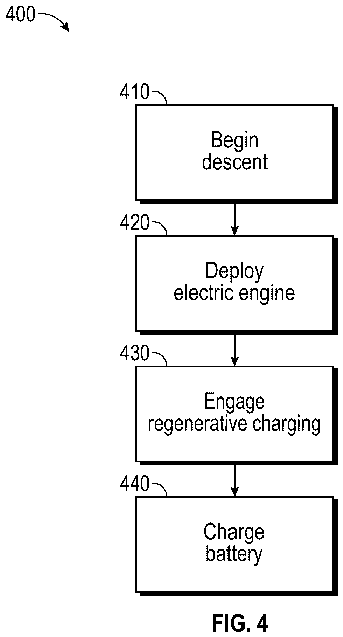

Turning now to Fig. 4, a flow diagram illustrating a non-limiting embodiment of a method 400 of providing the hybrid jet electric aircraft operation in accordance with the teachings of the present disclosure is shown. The method is first operative to begin descent 410 of the aircraft. The descent may be initiated in response to a pilot input received via a control device, such as a control stick or a decrease in thrust or both. As the aircraft starts to descend, or reduce altitude, the method is next operative to deploy 420 the electric engine. In deploying the electric engine, the engine may initiate the method in a retracted position in an aircraft fuselage. The electric engine may then be deployed into an operation position using electric or hydraulic motors and positioners. The combination of increased drag from the regenerative electric motors and the flight control surfaces may be used together to reduce the speed and/or increase the angle of approach of a descending aircraft.

The method is next operative to engage 430 a regenerative charging mode of the electric motors. The regenerative charging mode has a dual benefit of charging the battery in response to a rotation of the electric motor due to oncoming air pressure and providing increased drag to the aircraft to reduce speed. The increased reduction may be employed in conjunction with a reduced deployment of flight control surface. The method may then be operative to charge 440 the battery in response to the regenerative charging mode of the electric engine.

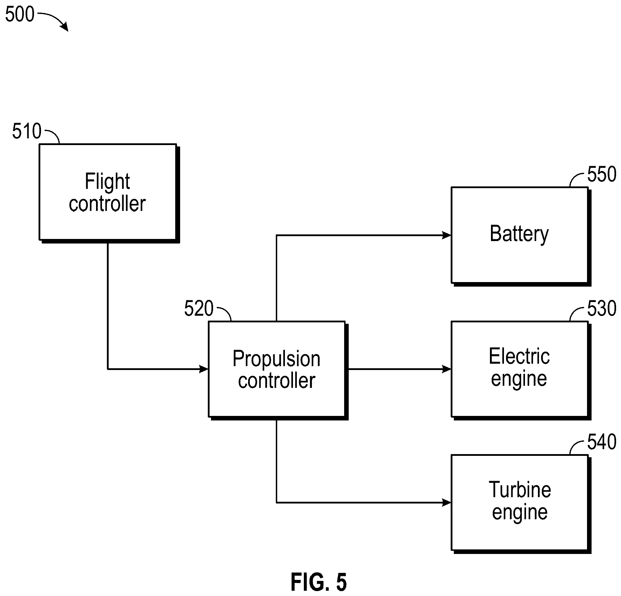

Turning now to Fig. 5, a block diagram illustrating a system 500 for providing the hybrid jet electric aircraft is shown. The exemplary system 500 may include a flight controller 510, a propulsion controller 520, an electric engine 530, a turbine engine 540 and a battery 550.

In this exemplary embodiment, the electric engine 530 is one or more aircraft electric propulsion engines. In an exemplary embodiment, the electric engine 530 is provided with an electric voltage by the battery 550. The electric engine 530 is retractable in order to be retracted and stored within the aircraft fuselage or wings, similar to landing gear, in order to reduce aerodynamic drag during at altitude aircraft operations, such as during cruise. The electric engine 530 has a regenerative mode wherein the electric engine 530 operates as a wind driven generator. This regenerative mode advantageously is used to generate an electric voltage to charge the battery 550 and to increase aerodynamic drag in order to reduce the speed of the aircraft.

The exemplary system further includes a combustion turbine engine 540. In this exemplary embodiment, the combustion turbine engine 540 is used as a primary propulsion source for the aircraft. The combustion turbine engine 540 may provide a level or thrust with additional thrust provided by the electric engine 530 during instances of required additional thrust, such as takeoff, climb or during loss of function of the combustion turbine engine 540. The combustion turbine engine 540 may be center mounted on an aircraft tail or fuselage. The combustion turbine engine 540 may further include an integral electric generator for providing a voltage to other aircraft systems and for charging the battery 550.

In this exemplary embodiment, the flight controller 510 is operative for generating a first control signal indicative of a climb request and a second control signal indicative of a cruise request. The flight controller 510 may receive control signals from aircraft controllers, such as control sticks, thrust levers and other cockpit controllers, the flight controller 510 may further be operative to generate a third control signal indicative of a descent request and wherein the electric propulsion engine 530 is engaged in a regenerative mode to charge the battery 550 in response to the third control signal.

The aircraft propulsion controller 520 operative to engage the electric propulsion engine 530 and the combustion turbine engine 540 in response to the first control signal and disengage the electric propulsion engine 530 in response to the second control signal. The aircraft propulsion controller 520 may be further operative for reducing a thrust of the combustion turbine engine 540 in response to the second control signal. The exemplary system 500 may further include a sensor for detecting a loss of thrust of the combustion turbine engine 540 and wherein the aircraft propulsion controller 520 is further operative for engaging the electric propulsion engine 530 in response to the detection of the loss of thrust.

In another exemplary embodiment, the system 500 is an aircraft including the combustion turbine engine 540 and the electric propulsion engine 530. The exemplary aircraft may further include an flight controller 510, such as an aircraft controller, for generating a first control signal indicative of a climb request and a second control signal indicative of a cruise request and an aircraft propulsion controller 520 operative to engage the combustion turbine engine 540 and the electric propulsion engine 530 in response to the first control signal and to disengage the electric propulsion engine in response to the second control signal. The exemplary aircraft may further include a battery 550 and wherein the battery 550 is operative to receive an electric voltage from the combustion turbine engine 540 in response to the second control signal. In an exemplary embodiment, the flight controller 510 may be further operative for generating a third control signal indicative of a descent request and wherein the aircraft propulsion controller is operative to engage a regenerative mode of the electric propulsion engine to charge a battery in response to the third control signal.

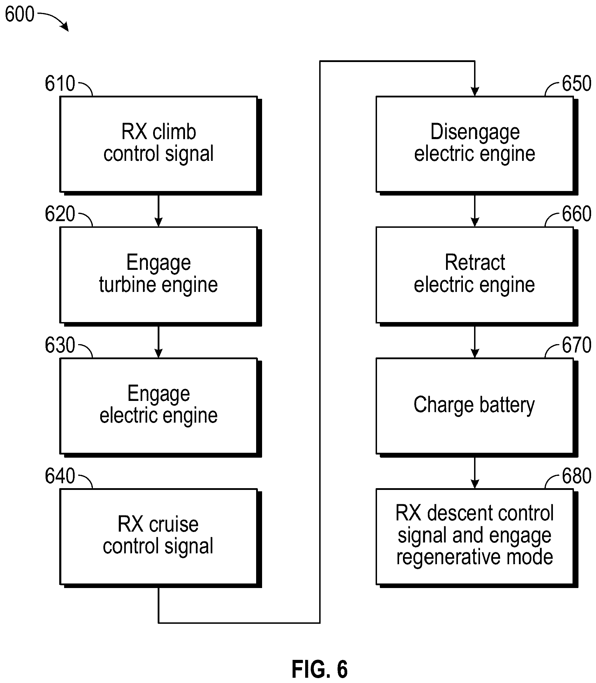

Turning now to Fig. 6, a flow diagram illustrating another non-limiting embodiment of a method 600 of providing the hybrid jet electric aircraft operation is shown.

The method is first operative for receiving 610, via an input, a first control signal indicative of a climb operation. In a first exemplary embodiment, the input may be an aircraft control stick. The first control signal may be generated by a flight controller in response to a flight control algorithm or in response to a pilot input. In an exemplary embodiment, the first control signal may further be indicative of an aircraft takeoff mode.

The method is next operative for engaging 620 a combustion turbine engine in response to the control signal and for engaging 630 an electric propulsion engine in response to the control signal. During takeoff and ascent, the electric propulsion engine provides an augmented thrust to the turbine engine to gain initial speed and altitude.

The method is next operative for receiving 640, via the input, a second control signal indicative a cruise operation. In response to the second control signal, the method is operative for disengaging 650 the electric propulsion engine. At cruise, the combustion turbine engine may provide sufficient thrust to maintain an airspeed at altitude without additional thrust augmentation by the electric engine. The method may further be operative during the cruise mode to reduce a thrust of the combustion turbine engine in response to the second control signal. In another exemplary embodiment, the method is operative for retracting 660 the electric propulsion engine into an aircraft fuselage in response to the second control signal. The electric engine may be retracted, such as retracted into an aircraft fuselage or folded into a more aerodynamic position in order to reduce drag on the aircraft during flight.

The method is next operative for charging 670 an electric battery with an electric power derived from the combustion turbine engine in response to the second control signal. The combustion turbine engine may be equipped with an electrical generator to provide operating power to aircraft electrical system and to recharge onboard electric batteries. The generator may be operative to recharge the electric battery, which may have been partially depleted during takeoff and climb operations, augmented with the electric engine.

The method may next be operative for receiving 680 a third control signal indicative of a descent operation and engaging a regenerative mode of the electric propulsion engine to charge a battery in response to the third control signal. The method may further include detecting a loss of thrust of the combustion turbine engine and extending and engaging the electric propulsion engine in response to the detection of the loss of thrust.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. An aircraft comprising:
an electric propulsion engine;
a combustion turbine engine;
a flight controller for generating a first control signal indicative of a thrust request, a second control signal indicative of a recharge request, and a third control signal indicative of a descent request; and
an aircraft propulsion controller operative to engage the electric propulsion engine and the combustion turbine engine in response to the first control signal and disengage the electric propulsion engine in response to the second control signal,
wherein the electric propulsion engine is operative to withdraw into an aircraft fuselage in response to the second control signal,
wherein the electric propulsion engine is operative to deploy in response to the third control signal, and
wherein the electric propulsion engine is engaged in a regenerative mode to charge a battery in response to the third control signal.

2. The aircraft of claim 1, further including a battery and an electric generator driven by the combustion turbine engine and wherein the electric generator is operative to provide an electric voltage to the electric battery in response to the second control signal.

3. The aircraft of any one of claims 1 or 2, further including a sensor for detecting a loss of thrust of the combustion turbine engine and wherein the aircraft propulsion controller is further operative for engaging the electric propulsion engine in response to the detection of the loss of thrust.

4. The aircraft of any one of claims 1-3, wherein the flight controller is an aircraft throttle control.

5. The aircraft of any one of claims 1-4, wherein the aircraft propulsion controller is further operative for reducing a thrust of the combustion turbine engine in response to the second control signal.

6. The aircraft of any one of claims 1-5, wherein the recharge request is generated in response to retaining a sufficient energy in the batteries to propel the aircraft to a landing.

7. A method comprising:
receiving, via an input, a first control signal indicative of a climb operation;
engaging a combustion turbine engine in response to the first control signal;
engaging an electric propulsion engine in response to the first control signal;
receiving, via the input, a second control signal indicative a cruise operation;
disengaging the electric propulsion engine and retracting the electric propulsion engine into an aircraft fuselage in response to the second control signal;
receiving a third control signal indicative of a descent operation;
engaging a regenerative mode of the electric propulsion engine to charge a battery and deploying the electric propulsion engine in response to the third control signal.

8. The method of claim 7, further including charging an electric battery with an electric power derived from the combustion turbine engine in response to the second control signal.

9. The method of claims 7 or 8, further including detecting a loss of thrust of the combustion turbine engine and engaging the electric propulsion engine in response to the detection of the loss of thrust.

10. The method of any one of claims 7-9, further including reducing a thrust of the combustion turbine engine in response to the second control signal.

## Patentansprüche

1. Flugzeug, das Folgendes umfasst:
einen elektrischen Antriebsmotor,
ein Verbrennungsturbinentriebwerk,
eine Flugsteuereinrichtung zum Erzeugen eines ersten Steuersignals, das auf eine Schubanforderung schließen lässt, eines zweiten Steuersignals, das auf eine Wiederaufladeanforderung schließen lässt, und eines dritten Steuersignals, das auf eine Sinkfluganforderung schließen lässt, und
eine Flugzeugantrieb-Steuereinrichtung, die funktionsfähig ist, um als Reaktion auf das erste Steuersignal den elektrischen Antriebsmotor und das Verbrennungsturbinentriebwerk in Betrieb zu setzen und als Reaktion auf das zweite Steuersignal den elektrischen Antriebsmotor außer Betrieb zu setzen,
wobei der elektrische Antriebsmotor funktionsfähig ist, um sich als Reaktion auf das zweite Steuersignal in einen Flugzeugrumpf einzuziehen,
wobei der elektrische Antriebsmotor funktionsfähig ist, um sich als Reaktion auf das dritte Steuersignal zu entfalten, und
wobei der elektrische Antriebsmotor als Reaktion auf das dritte Steuersignal in einem regenerierenden Modus in Betrieb genommen wird, um eine Batterie zu laden.

2. Flugzeug nach Anspruch 1, das ferner eine Batterie und einen elektrischen Generator, der durch das Verbrennungsturbinentriebwerk angetrieben wird, einschließt, und wobei der elektrische Antriebsmotor funktionsfähig ist, um als Reaktion auf das zweite Steuersignal eine elektrische Spannung für die elektrische Batterie bereitzustellen.

3. Flugzeug nach Anspruch 1 oder 2, das ferner einen Sensor zum Erfassen eines Schubverlustes des Verbrennungsturbinentriebwerks einschließt, und wobei die Flugzeugantrieb-Steuereinrichtung ferner funktionsfähig ist zum In-Betrieb-Setzen des elektrischen Antriebsmotors als Reaktion auf das Erfassen des Schubverlustes.

4. Flugzeug nach einem der Ansprüche 1 bis 3, wobei die Flugsteuereinrichtung eine Flugzeug-Gashebelsteuerung ist.

5. Flugzeug nach einem der Ansprüche 1 bis 4, wobei die Flugzeugantrieb-Steuereinrichtung ferner funktionsfähig ist zum Verringern eines Schubs des Verbrennungsturbinentriebwerks als Reaktion auf das zweite Steuersignal.

6. Flugzeug nach einem der Ansprüche 1 bis 5, wobei die Wiederaufladeanforderung als Reaktion auf das Zurückbehalten einer ausreichenden Energie in den Batterien, um das Flugzeug bis zu einer Landung anzutreiben, erzeugt wird.

7. Verfahren, das Folgendes umfasst:
Empfangen, über eine Eingabe, eines ersten Steuersignals, das auf eine Steigflugoperation schließen lässt,
In-Betrieb-Setzen eines Verbrennungsturbinentriebwerks als Reaktion auf das erste Steuersignal,
In-Betrieb-Setzen eines elektrischen Antriebsmotors als Reaktion auf das erste Steuersignal,
Empfangen, über die Eingabe, eines zweiten Steuersignals, das auf einen Reiseflugbetrieb schließen lässt,
Außer-Betrieb-Setzen des elektrischen Antriebsmotors und Einziehen des elektrischen Antriebsmotors in einen Flugzeugrumpf als Reaktion auf das zweite Steuersignal,
Empfangen eines dritten Steuersignals, das auf einen Sinkflugbetrieb schließen lässt,
In-Betrieb-Setzen eines regenerierenden Modus des elektrischen Antriebsmotors, um eine Batterie zu laden, und Entfalten des elektrischen Antriebsmotors als Reaktion auf das dritte Steuersignal.

8. Verfahren nach Anspruch 7, das ferner das Laden einer elektrischen Batterie mit einer Elektroenergie, die von dem Verbrennungsturbinentriebwerk abgeleitet wird, als Reaktion auf das zweite Steuersignal einschließt.

9. Verfahren nach Anspruch 7 oder 8, das ferner das Erfassen eines Schubverlustes des Verbrennungsturbinentriebwerks und das In-Betrieb-Setzen des elektrischen Antriebsmotors als Reaktion auf das Erfassen des Schubverlustes einschließt.

10. Verfahren nach einem der Ansprüche 7 bis 9, das ferner das Verringern eines Schubs des Verbrennungsturbinentriebwerks als Reaktion auf das zweite Steuersignal einschließt.

## Revendications

1. Un aéronef comprenant :
un moteur à propulsion électrique ;
un moteur à turbine de combustion ;
un organe de commande de vol pour la génération d'un premier signal de commande indicatif d'une demande de poussée et d'un deuxième signal de commande indicatif d'une demande de recharge ; et
un organe de commande de propulsion d'aéronef fonctionnel pour engager le moteur à propulsion électrique et le moteur à turbine de combustion en réaction au premier signal de commande et désengager le moteur à propulsion électrique en réaction au deuxième signal de commande,
le moteur à propulsion électrique étant fonctionnel pour se retirer dans un fuselage d'aéronef en réaction au deuxième signal de commande,
le moteur à propulsion électrique étant fonctionnel pour se déployer en réaction au troisième signal de commande, et
le moteur à propulsion électrique étant engagé dans un mode régénératif pour charger une batterie en réaction au troisième signal de commande.

2. Aéronef selon la revendication 1, incluant en outre une batterie et un générateur électrique entraîné par le moteur à turbine de combustion et le générateur électrique et fonctionnel pour fournir une tension électrique à la batterie électrique en réaction au deuxième signal de commande.

3. Aéronef selon l'une quelconque des revendications 1 ou 2, incluant en outre un capteur pour détecter une perte de poussée du moteur à turbine de combustion et l'organe de commande de production d'aéronef est en outre fonctionnel pour engager le moteur à propulsion électrique en réaction à la détection de la perte de poussée.

4. Aéronef selon l'une quelconque des revendications 1 à 3, dans lequel l'organe de commande de vol est une commande des gaz d'aéronef.

5. Aéronef selon l'une quelconque des revendications 1 à 4, dans lequel l'organe de commande de propulsion d'aéronef est en outre fonctionnel pour réduire une poussée du moteur à turbine de combustion en réaction au deuxième signal de commande.

6. Aéronef selon l'une quelconque des revendications 1 à 5, dans lequel la demande de recharge est générée en réaction à la retenue d'une énergie suffisante dans les batteries pour propulser l'aéronef jusqu'à un atterrissage.

7. Procédé comprenant :
la réception, via une saisie, d'un premier signal de commande indicatif d'une opération d'ascension ;
l'engagement d'un moteur à turbine de combustion en réaction au premier signal de commande ;
l'engagement d'un moteur à turbine de combustion en réaction au premier signal de commande ;
réception, via la saisie, d'un deuxième signal de commande indicatif d'une opération de croisière ;
le désengagement du moteur à propulsion électrique et la rétraction du moteur à propulsion électrique dans un fuselage d'aéronef en réaction au deuxième signal de commande ;
la réception d'un troisième signal de commande indicatif d'une opération de descente ;
l'engagement d'un mode génératif du moteur à propulsion électrique pour charger une batterie et de déployer le moteur à propulsion électrique en réaction au troisième signal de commande.

8. Procédé selon la revendication 7, incluant en outre le chargement d'une batterie électrique avec un courant électrique dérivé du moteur à turbine de combustion en réaction au deuxième signal de commande.

9. Procédé selon les revendications 7 ou 8, incluant en outre la détection d'une perte de poussée du moteur à turbine de combustion et l'engagement du moteur à propulsion électrique en réaction à la détection de la perte de poussée.

10. Procédé sel détenait second l'engagement d'un moteur à turbine de combustion en réaction au signal de commande actionner second laissa on l'une quelconque des revendications 7 à 9, incluant en outre la réduction d'une poussée du moteur à turbine de combustion en réaction au deuxième signal de commande.
